(19) Europäisches Patentamt
European Patent Office
Office européen des brevets

(11) **EP 4 396 385 B1**

(12) **FASCICULE DE BREVET EUROPEEN**

(45) Date de publication et mention
de la délivrance du brevet:
**14.01.2026 Bulletin 2026/03**

(21) Numéro de dépôt: **22773286.4**

(22) Date de dépôt: **29.08.2022**

(51) Classification Internationale des Brevets (IPC):
*C22B 9/16* (2006.01)    *C22B 7/00* (2006.01)
*C22B 21/00* (2006.01)    *C22B 9/00* (2006.01)
*C22B 9/05* (2006.01)

(52) Classification Coopérative des Brevets (CPC):
**C22B 9/16; C22B 7/003; C22B 9/003; C22B 9/05;
C22B 21/0092**

(86) Numéro de dépôt international:
**PCT/FR2022/051619**

(87) Numéro de publication internationale:
**WO 2023/031546 (09.03.2023 Gazette 2023/10)**

(54) **PROCÉDÉ DE RECYCLAGE DE SCRAP EN ALLIAGE D'ALUMINIUM ECO-RESPONSABLE**

VERFAHREN ZUR NACHHALTIGEN WIEDERVERWERTUNG VON
ALUMINIUMLEGIERUNGSSCHROTT

METHOD FOR SUSTAINABLY RECYCLING ALUMINIUM ALLOY SCRAP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.08.2021 FR 2109085**

(43) Date de publication de la demande:
**10.07.2024 Bulletin 2024/28**

(73) Titulaires:
• **Constellium Issoire
63500 Issoire (FR)**
• **Constellium Neuf Brisach
68600 Biesheim (FR)**
• **Constellium Muscle Shoals LLC
Muscle Shoals, AL 35661 (US)**

(72) Inventeurs:
• **PICHAT, Anne
38500 SAINT-CASSIEN (FR)**
• **BERTHERAT, Marc
3968 VEYRAS (CH)**
• **VASSEL, Alain
38960 SAINT ETIENNE DE CROSSEY (FR)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
WO-A2-2007/015013    JP-A- H10 226 830
US-A- 4 571 258    US-A1- 2020 255 922

• **VERRAN ET AL: "An experimental study of
aluminum can recycling using fusion in
induction furnace", RESOURCES,
CONSERVATION AND RECYCLING, ELSEVIER,
AMSTERDAM, NL, vol. 52, no. 5, 15 February
2008 (2008-02-15), pages 731 - 736,
XP022482903, ISSN: 0921-3449, DOI: 10.1016/
J.RESCONREC.2007.10.001**

## Description

## DOMAINE TECHNIQUE

L'invention concerne la refusion dans un four à induction de scrap revêtus en alliage d'aluminium, de préférence de scrap de récupération issus d'emballage ménager en aluminium, typiquement des boîtes de boisson usagées en aluminium.

## ART ANTERIEUR

Le recyclage de l'aluminium présente l'avantage d'être économique et écologique. La production de l'aluminium secondaire requière jusqu'à 95 % moins d'énergie que l'aluminium primaire et permet la réduction des émissions en $CO_2$. Dans un souci d'améliorer l'impact environnemental de la production de l'aluminium, l'industrie de l'aluminium cherche à réduire la quantité de $CO_2$ émise lors de l'étape du recyclage durant l'étape de refusion des scrap. Dans le présent texte, on désigne sous la formule générique « scrap » les matières premières pour le recyclage, constitués de produits en aluminium et/ou en alliage d'aluminium résultant de la collecte et/ou de la récupération de de métaux produits à différentes étapes de fabrication ou de produits après utilisation. Sauf mention contraire, on se réfère à la norme NF EN 12258-3 Septembre 2003 qui définit des termes en rapport avec les scrap d'aluminium et d'alliages d'aluminium. On appelle « scrap revêtu » scrap composé de pièces ayant n'importe quel type de revêtement, par exemple peinture, vernis, encre d'impression, plastique, papier, métal.

Les boites de boisson en alliage d'aluminium sont constituées d'un corps de boite et d'un couvercle ; usuellement le corps de boîte est réalisé en alliage AA3104 et le couvercle en alliage AA5182. Le corps de boîte et le couvercle sont revêtus d'un revêtement organique et/ou inorganique comme un vernis et/ou une peinture et/ou matière organique.

Les boites de boissons usagées, aussi appelées UBC (Used Beverage Can) en aluminium appartiennent à la catégorie des scrap revêtus. De même, les emballages alimentaires ou les boitiers d'aerosols en alliages d'aluminium appartiennent à la catégorie des scrap revêtus. Ils sont contaminés par la présence de vernis et/ou de peinture et/ou d'encre d'impression généralement. Il est possible aussi que ces contenants soient contaminés par la présence éventuelle de poussière, de sable, d'eau, de résidus de boisson ou d'autres pollutions.

Parmi les emballages ménagers, on peut citer les boites de boissons usagées, les emballages alimentaires usagés, les boitiers d'aérosols usagés. Ces types de produits ou tout autre produit revêtu en alliage d'aluminium peuvent être collectés. Usuellement, après collecte, ces produits sont compactés de façon à former des « balles » ou « briquettes » qui facilitent le stockage et le transport. La compaction est aussi parfois envisagée pour faciliter la submergence des scraps dans les fours de refusion comme dans la demande US 4, 159,907.

Il est toutefois aussi possible de les broyer. On obtient du scrap sous forme divisée, constitué d'entité individuelle. L'opération de broyage permet notamment de déchiqueter les produits et d'éviter que du liquide ne soit encore présent dans les contenants et ainsi éviter des risques d'explosion durant l'opération de refusion. Il est possible durant cette étape de broyage de procéder à un tri pour séparer toute contamination comme par exemple d'éventuels morceaux de ferraille, tout autre produits métallique n'étant pas en aluminium ou en alliage d'aluminium ou des produits en plastiques.

La technologie utilisée dans la profession pour le recyclage des produits revêtus, en particulier des UBC, utilise usuellement une ligne dédiée constituée d'étapes de préparation à froid (broyeur, tri magnétique et séparateur à lame d'air), élimination à chaud dans un « decoater » des encres, vernis et autres matières organiques. Les scrap revêtus sont ensuite refondus typiquement dans un four à bassin (four « side-well »). Un traitement du métal par ajout de sel (3% à 5%) est nécessaire pour éliminer les oxydes contenus dans le métal liquide (R. Evans, G. Guest, "The aluminium decoating handbook", Stein Atkinston Stordy, Gillespie Powers internet source). Le métal est ensuite transporté vers l'atelier de fonderie pour être coulé. Une autre alternative est de réaliser la refusion dans en four rotatif. Cette solution requiert un taux de sel plus élevé que pour le four side-well (10% à 15%). La combustion des matières organiques et la refusion du métal se font dans ce cas en simultané dans l'enceinte du four.

US 3,999,980 décrit une méthode ne nécessitant pas le traitement préalable dans un « decoater » des UBC. Elle est réalisée dans un four de fusion de scrap sous atmosphère inerte et la compare à des procédés typiques utilisant un sel fondu.

Une autre alternative est la refusion en four multi chambres (« multi-chamber ») (« Alumnium recycling » M. Schlesinger, CRC Press, (2007)). Les scrap revêtus sont chargés, préchauffés et délaqués dans une chambre séparée (tunnel vertical ou rampe horizontale). La combustion des matières organiques contribue à chauffer l'installation. C'est un procédé sans sel. Cette solution présente l'inconvénient de devoir être effectuée dans un four à gaz, qui n'est pas adapté pour réduire les émissions de CO2.

Une solution pour réduire les émissions de $CO_2$ est d'utiliser des fours électriques. La technologie de four induction est mentionnée pour le recyclage des UBC dans les ouvrages de référence (R. Evans, G. Guest, "The aluminium decoating handbook", Stein Atkinston Stordy, Gillespie Powers internet source). Le four électrique à induction à creuset présente l'avantage d'un bon rendement énergétique et génère peu de perte métal. Le four électrique à canal de grande capacité est parfois utilisé pour la refusion de chutes neuves de fabrication ou de boîtes boisson après délaquage (F. Herbulot - Récupération et recyclage de l'aluminium - Techniques de l'Ingénieur - Mars 2001). Toutefois ces types de four n'ont pas connu un essor industriel importants. Ils exigent des matières premières propres pour éviter l'encrassage progressif des parois du creuset par les oxydes ou la formation d'oxydes dans le métal.

Il existe toutefois, en ce qui concerne le traitement de scrap revêtus en four à induction, un préjugé de l'homme du métier indiquant que le recyclage de scrap revêtus, en particulier le scrap de récupération issu de boite boisson usagée n'est pas possible en four électrique à induction à l'échelle industrielle sans l'utilisation de sels fondus (Verran et al. Ressources, Conservation and Recycling 52 (2008) 731-736). Les sels fondus jouent le rôle de collecteur des oxydes et permettent de constituer une scorie saline pâteuse qui se sépare du métal liquide et flotte sur celui-ci. La présence de scories salines présente l'inconvénient de réduire le rendement métal brut ou net. On appelle « rendement métal brut » (exprimé en %) le ratio entre la masse de métal liquide effectivement défourné ou coulé sur la masse de matière chargée dans un four. On appelle « rendement métal net » le ratio entre la masse de métal liquide effectivement défourné ou coulé sur la masse nette de métal chargé dans un four.

Il existe donc un besoin d'une solution économique et fiable permettant l'utilisation de fours à induction sans sels fondus dans le traitement des scrap revêtus, en particulier de scrap de récupération issu de boîtes de boisson usagées en aluminium.

US2020/0255922 décrit une méthode de traitement dans un four à induction sous vide pour le recyclage de scrap d'usinage en alliage d'aluminium lithium. Cette méthode est réalisée en batch, c'est-à-dire que le scrap en alliage d'aluminium lithium est enfourné en une seule fois afin d'assurer le fonctionnement sous vide. Afin d'accroître la quantité de métal fondu dans le four, US2020/0255922 prévoit une étape de compactage des copeaux.

WO 2007/015013 décrit une méthode de traitement dans un four à induction pour le recyclage de scrap d'usinage en alliage d'aluminium lithium. Les scrap en alliage d'aluminium lithium sont chargées sur un pied de bain de métal liquide de manière à créer un matelas flottant de scrap d'épaisseur contrôlée à la surface du lit de métal liquide (étape de chargement). Ce matelas flottant de scrap protège le métal liquide de l'oxydation et évite l'utilisation d'une atmosphère inerte. Ce matelas flottant est constitué de scrap divisés dont au moins une dimension est inférieure à 1 mm et pour lesquels aucune dimension n'est plus grande que 25 mm. La masse volumique du scrap est comprise entre 0,05 et préférentiellement 0,1 à 0,7 t/m3 (tonne par mètre cube) et de façon encore plus avantageuse entre 0,2 à 0,4 t/m3. Les inventeurs ont constaté qu'il n'était pas possible d'obtenir un bon rendement métal brut avec du scrap revêtu avec ces seules considérations géométriques.

US 4, 159,907 montre l'inconvénient de la faible masse volumique du scrap qui a tendance à rester en surface de l'aluminium liquide et à s'oxyder et propose de densifier le scrap par compression pour résoudre ce problème. D'autres documents dans l'état de l'état technique proposent des solutions alternatives à l'immersion des scrap dans des fours de fusion comme par exemple US 4 571 258 A.

US6,074,455 décrit une méthode d'immersion rapide du scrap dans l'aluminium liquide grâce à son introduction dans le vortex créé par un rotor. US 3,873,305 décrit une méthode de fusion de scrap de boite boisson dans lequel on force le scrap à être submergé par l'action d'une hélice tournante. JP 10147822 décrit un four utilisé pour la fusion de scrap de boite boisson dans lequel le scrap est mélangé au-dessus du bain de métal liquide à l'aide d'un équipement spécifique. Ces solutions d'immersion utilisant des moyens mécaniques pour immerger les scrap présentent l'inconvénient de favoriser l'oxydation du bain ce qui n'est pas favorable pour le rendement métal brut.

Le problème que la présente invention cherche à résoudre est donc de proposer une méthode de recyclage des scrap revêtus en alliage d'aluminium, de préférence de scrap de récupération issus d'emballage ménager en aluminium, typiquement des boîtes de boisson usagées en aluminium, utilisant un four de refusion par induction sans utiliser de sels de protection.

## EXPOSE DE L'INVENTION

L'invention a pour objet un procédé de refusion de scrap revêtu en alliage d'aluminium comprenant les étapes suivantes

    (i) on approvisionne du scrap revêtu broyé à base d'alliages d'aluminium, constitué d'entités individuelles,
    (ii) on réalise un délaquage dudit scrap revêtu broyé pour obtenir du scrap délaqué,
    (iii) on prépare un pied de bain initial de métal liquide d'une première composition dans un four à induction à creuset fonctionnant à une fréquence donnée,
    (iv) on charge le scrap délaqué dans le four à induction directement sur le pied de bain initial pour être fondu.

Selon l'invention, au moins 50% des entités individuelles du scrap revêtu broyé approvisionné à l'étape i) a un rapport de pliage (R) inférieur ou égal à 0.6,

où le rapport de pliage (R) d'une entité individuelle est défini par l'expression

$$rapport\ de\ pliage = R = \frac{surface\ dépliée - surface\ pliée}{surface\ dépliée}$$

où la surface pliée est la surface maximale de la projection orthogonale de l'entité individuelle sur un plan et la surface dépliée est la surface totale de la même entité individuelle après avoir été dépliée.

Le scrap revêtu broyé est obtenu selon un procédé comprenant une étape de broyage avec un broyeur à couteaux, de préférence équipé d'une grille. Selon l'invention, le broyeur à couteaux utilisé est préféré car il permet une coupe franche et évite de « froisser » les scrap ce qui entraine un pliage rédhibitoire pour obtenir un délaquage efficace et une introduction des scrap dans le four à induction à creuset. De manière préféré, avant l'étape d'approvisionnement de scrap revêtu broyé, du scrap revêtu est approvisionné, puis est broyé dans un broyeur à couteaux. Cela consiste à découper le scrap revêtu entre des couteaux montés sur un arbre en rotation et une rangée de couteaux fixe. La présence d'une grille peut assurer un contrôle granulométrique à la sortie.

Cette étape préalable de broyage dans un broyeur à couteaux correspond à un procédé de refusion de scrap revêtu en alliage d'aluminium comprenant les étapes suivantes successives :

- on approvisionne du scrap revêtu à base d'alliages d'aluminium, préférentiellement du scrap de récupération issus d'emballage ménager en aluminium, typiquement des boîtes de boisson usagées en aluminium
- On broie ledit scrap revêtu dans un broyeur à couteaux, optionnellement muni d'une grille, pour obtenir du scrap revêtu broyé constitué d'entités individuelles
- on réalise un délaquage dudit scrap revêtu broyé pour obtenir du scrap délaqué,
- on prépare un pied de bain initial de métal liquide d'une première composition dans un four à induction à creuset fonctionnant à une fréquence donnée,
- on charge le scrap délaqué dans le four à induction directement sur le pied de bain initial pour être fondu.

Selon l'invention, au moins 50% des entités individuelles du scrap revêtu broyé a un rapport de pliage (R) inférieur ou égal à 0.6,

où le rapport de pliage (R) d'une entité individuelle est défini par l'expression

$$rapport\ de\ pliage = R = \frac{surface\ dépliée - surface\ pliée}{surface\ dépliée}$$

où la surface pliée est la surface maximale de la projection orthogonale de l'entité individuelle sur un plan et la surface dépliée est la surface totale de la même entité individuelle après avoir été dépliée.

Avantageusement, au moins 50% des entités individuelles du scrap revêtu broyé approvisionné à l'étape i) présente une granulométrie comprise entre 5 et 50 mm, préférentiellement entre 8 et 50 mm, plus préférentiellement entre 8 et 25 mm, plus préférentiellement entre 8 et 16 mm, la granulométrie étant mesurée par tamisage.

Selon ce mode avantageux, le scrap revêtu broyé est obtenu selon un procédé comprenant une étape de broyage avec un broyeur à couteaux, équipé d'une grille adaptée pour obtenir une granulométrie comprise entre 5 et 50 mm, préférentiellement entre 8 et 50 mm, encore plus préférentiellement entre 8 et 25 mm, encore plus préférentiellement de 8 à 16 mm.

Cette étape préalable de broyage dans un broyeur à couteaux équipé d'une grille correspond à un procédé de refusion de scrap revêtu en alliage d'aluminium comprenant les étapes suivantes successives :

- on approvisionne du scrap revêtu à base d'alliages d'aluminium, préférentiellement du scrap de récupération issus d'emballage ménager en aluminium, typiquement des boîtes de boisson usagées en aluminium
- On broie ledit scrap revêtu dans un broyeur à couteaux, muni d'une grille, pour obtenir du scrap revêtu broyé constitué d'entités individuelles
- on réalise un délaquage dudit scrap revêtu broyé pour obtenir du scrap délaqué,
- on prépare un pied de bain initial de métal liquide d'une première composition dans un four à induction à creuset fonctionnant à une fréquence donnée,
- on charge le scrap délaqué dans le four à induction directement sur le pied de bain initial pour être fondu.

Avantageusement, au moins 50% des entités individuelles du scrap revêtu broyé approvisionné à l'étape i) présente une hauteur inférieure ou égale à 50 mm, de manière préférée inférieure ou égale à 30 mm, encore plus préférentiellement inférieure ou égale à 15 mm.

Avantageusement, la masse volumique du scrap revêtu broyé approvisionné à l'étape i) est comprise entre 0.2 et 0.4 t/m3.

Avantageusement, le scrap revêtu approvisionné à l'étape i) est constitué majoritairement à partir de scrap de récupération issu d'emballage ménager en aluminium, typiquement des boîtes de boisson usagées en aluminium.

C'est-à-dire que le scrap revêtu broyé est obtenu à partir de de scrap de récupération issus d'emballage ménager en aluminium, typiquement des boîtes de boisson usagées en aluminium. Avantageusement, le scrap délaqué obtenu après l'étape ii) est introduit dans le four à induction à l'étape iv) à une température supérieure à 100°C, préférentiellement à une température comprise entre 200°C et 450°C, plus préférentiellement entre 300°C et 450°C, encore plus préférentiellement entre 400°C et 450°C.

Avantageusement, aucun sel de protection n'est utilisé dans le four à induction.

Avantageusement, lors de l'étape iv) un lit de scrap délaqué flottant est maintenu à la surface du bain liquide durant l'essentiel de la durée de l'étape iv).

Avantageusement, la fréquence du four à induction lors de l'étape iv) est comprise entre 50 Hz et 150 Hz.

Avantageusement, le chargement à l'étape iv) est réalisé de manière discontinue ou continue, de préférence à l'aide d'une vis sans fin ou une trémie ou un système de vibreur.

Avantageusement, la température du bain de métal liquide lors de l'étape iv) est inférieure ou égale à 750°C, préférentiellement inférieure ou égale à 730°C.

Avantageusement, lors de l'étape iv) le bain de métal liquide est inerté, typiquement à l'aide d'un flux de gaz argon.

## FIGURES

[Fig. 1] La figure 1 représente les principes de la méthode permettant de mesurer le rapport de pliage R. 1a et 1c représentent respectivement l'aspect d'une entité individuelle de scrap revêtu broyé approvisionné et l'aspect de la même entité individuelle dépliée. 1 b représente la projection orthogonale de l'entité individuelle 1a donnant une surface maximale. 1d représente le contour de la surface dépliée permettant la mesure de la surface dépliée.

[Fig. 2] La figure 2 représente la méthode permettant de mesurer la hauteur d'une entité individuelle de scrap revêtu broyé.

[Fig. 3] La figure 3 représente l'aspect des scrap revêtus broyés approvisionnés selon l'invention.

[Fig. 4] La figure 4 représente un schéma d'un four à induction à creuset avec les mouvements de brassage.

[Fig. 5] La figure 5 représente l'aspect des scrap revêtus broyés hors invention obtenus par un procédé de broyage à marteaux.

## DESCRIPTION DETAILLEE DE L'INVENTION

Le procédé selon l'invention comprend quatre étapes successives : premièrement une étape d'approvisionnement du scrap revêtu broyé, deuxièmement une étape de délaquage du scrap revêtu broyé, troisièmement une étape de préparation d'un pied de bain de métal liquide dans un four induction et quatrièmement le chargement du scrap délaqué dans le four à induction.

1/Approvisionnement du scrap revêtu broyé

Le scrap revêtu susceptible d'être recyclé par le procédé selon la présente l'invention se présente sous forme broyée. Il est important selon l'invention que le scrap revêtu soit broyé et approvisionné sous forme divisée. Le scrap revêtu broyé selon l'invention est constitué d'entités individuelles. Elles sont de plus petites dimensions comparées à celle des déchets initiaux tels que des boites boissons ou des boites de conserve.

Dans la suite, sauf mention contraire, les proportions en % d'entités individuelles correspondent à des % numérique d'entités individuelles.

Il est important selon l'invention que la majorité des entités individuelles du scrap revêtu broyé présente un rapport de pliage inférieur ou égal à 0.6. Avantageusement, au moins 50% des entités individuelles du scrap revêtu broyé présente un rapport de pliage (R) inférieur ou égal à 0.6. Préférentiellement, au moins 60%, ou 70% ou 80% des entités individuelles du scrap revêtu broyé présente un rapport de pliage (R) inférieur ou égal à 0.6. Le rapport de pliage d'une entité individuelle est défini par l'équation 1.

$$rapport\ de\ pliage = R = \frac{surface\ dépliée - surface\ pliée}{surface\ dépliée} \qquad \text{(équation 1)}$$

Préférablement, au moins 50% des entités individuelles du scrap revêtu broyé approvisionné à l'étape i) a un rapport de pliage (R) inférieur ou égal à 0.5, encore plus préférablement inférieur ou égal à 0.4.

Le rapport de pliage d'une entité individuelle du scrap revêtu broyé quantifie la façon dont cette entité individuelle a été pliée lors des étapes précédentes. Plus ce rapport est élevé, plus l'entité individuelle a été pliée et est donc compacte, sous forme globulaire notamment. Plus le rapport est faible plus l'entité individuelle est plane. Les inventeurs ont constaté qu'il était nécessaire d'avoir un rapport de pliage inférieur ou égal à 0.6 pour éviter l'utilisation de sels, dit flux de recyclage, pour séparer les oxydes du métal liquide, lors de l'étape de refusion dans le four à induction à creuset.

La surface pliée est la surface apparente d'une entité individuelle de scrap revêtu broyé. La surface pliée est définie comme la surface maximale de la projection orthogonale sur un plan de l'entité individuelle.

La surface dépliée correspond à la surface développée d'une entité individuelle de scrap revêtu broyé. La surface dépliée est définie comme la surface totale de l'entité individuelle de scrap revêtu broyé après avoir été déplié. Il est à noter que connaissant l'épaisseur et la masse et la masse volumique moyenne de l'entité individuelle on peut aisément déterminer la surface dépliée. On peut également obtenir la surface dépliée en dépliant l'entité individuelle.

A titre d'exemple, si on considère une entité individuelle de scrap revêtu broyé ayant typiquement la dimension d'un timbre-poste et ayant une surface dépliée de 1 cm$^2$, elle présente un rapport de pliage de 0.5 si cette entité est repliée en deux. Cette même entité présente un rapport de pliage de 0 si elle n'a pas été pliée.

Les inventeurs ont constaté que le nombre de plis ou de recouvrement de surface détériore la planéité de l'entité individuelle. D'autre part, ils ont constaté qu'il est important que le scrap revêtu soit le moins replié sur lui-même pour que les surfaces revêtues soient en contact direct avec l'atmosphère du four de délaquage et que par conséquent les échanges de masses et de chaleur à la surface du scrap intervenant lors de l'opération de délaquage puissent se faire le plus efficacement possible.

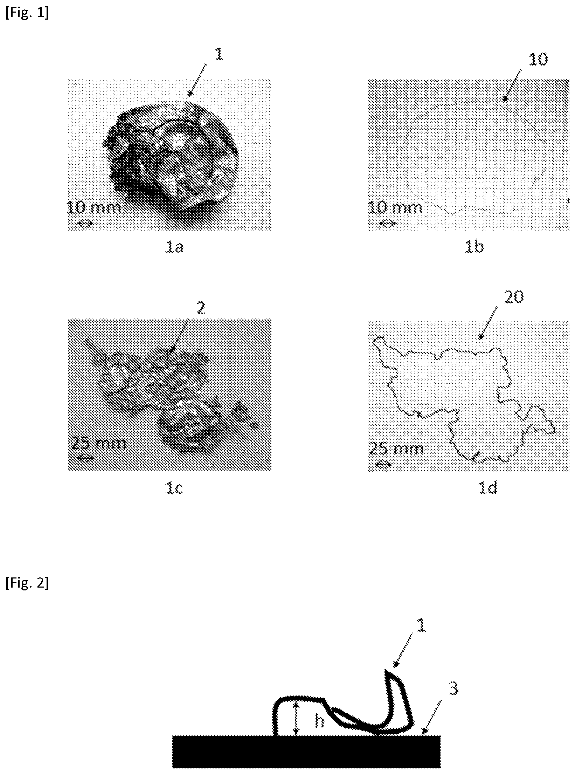

Le rapport de pliage peut être mesuré de la façon suivante : on prend une entité individuelle de scrap revêtu broyé (1, figure 1a). On utilise une feuille de papier dont la masse $m_0$ et la surface $S_0$ sont connues. On dessine le contour de l'entité individuelle sur la feuille de telle sorte à obtenir la surface pliée (10, figure 1b), en s'assurant que l'entité individuelle a été placée sur la feuille de papier de telle sorte à avoir la projection de la surface maximale de l'entité individuelle de scrap revêtu (10, Figure 1b). On obtient ainsi la surface maximale de la projection orthogonale de l'entité individuelle sur un plan. On découpe le contour et on pèse le morceau $m_1$. Une fois cette étape réalisée, on déplie la même entité individuelle de scrap revêtu broyé (2, figure 1c). On reprend une feuille de papier dont la masse $m'_0$ et sa surface $S'_0$ sont connues. On dessine les contours de l'entité individuelle scrap revêtu ainsi dépliée (20, Figure 1d) ; on découpe les contours et on pèse $m_2$. Le rapport de pliage (R) peut être déduit selon l'équation 2

$$R = \frac{\frac{m_2}{m'_0}S'_0 - \frac{m_1}{m_0}S_0}{\frac{m_2}{m'_0}S'_0} \qquad \text{(équation 2)}$$

L'opération de dépliage peut être faite manuellement. Lors de cette opération, il est possible que des morceaux se détachent. Chacun des morceaux doit être pris en compte dans la mesure de la masse $m_2$.

L'estimation du pourcentage d'entité individuelle de scrap revêtu broyé ayant un rapport de pliage inférieur à 0.6 peut être réalisé sur l'ensemble du scrap ou sur une partie, typiquement sur un nombre d'entité individuelle au moins égale à 20.

Avantageusement, l'entité individuelle de scrap revêtu broyé est sensiblement plane. Une entité individuelle de scrap revêtu broyé peut s'inscrire dans un volume fictif défini par une longueur, une largeur et une hauteur. La planéité de l'entité individuelle de scrap revêtu broyé est caractérisée par la hauteur minimale du volume fictif, exprimée en mm. Pour mesurer la hauteur (h), une entité individuelle de scrap revêtu broyé 1 est posée sur une règle de planéité 3 de telle sorte à obtenir la hauteur minimale de l'entité (voir figure 2). La règle de planéité peut être toute surface plane, telle qu'un marbre de mesure.

Avantageusement au moins 50% ou 60% ou 70% ou 80% des entités individuelles du scrap revêtu broyé présente une hauteur inférieure ou égale à 50 mm, ou 40 mm, ou 30 mm, ou 20 mm ou 15 mm ou 10 mm ou 5 mm. Les inventeurs ont constaté que la hauteur d'une entité individuelle de scrap revêtu broyé n'est pas modifiée par l'opération de délaquage. Les inventeurs pensent que disposer d'une majorité d'entités individuelles de scrap revêtu broyé présentant une hauteur inférieure ou égale à 50 mm, ou 40 mm, ou 30 mm, ou 20 mm ou 15 mm ou 10 mm ou 5 mm, favorise leur arrangement sous forme de strates empilées et améliore leur submergence dans le bain de métal liquide du four à induction.

L'estimation du pourcentage d'entité individuelle de scrap revêtu broyé ayant une hauteur inférieure ou égale à 50 mm peut être réalisé sur l'ensemble du scrap ou sur une partie, typiquement sur un nombre d'entité individuelle au moins égale à 20.

Dans la suite, sauf mention contraire, l'utilisation de l'expression « compris entre ..et .. » peut être remplacée par l'expression « compris de .. à .. ». Dans la suite, sauf mention contraire, l'expression du style « le gain est compris entre A et B » signifie que le gain est compris de A à B ; le gain peut prendre la valeur A ou B ; les bornes A et B sont comprises.

Avantageusement, au moins 50% ou 60% ou 70% ou 80% des entités individuelles du scrap revêtu broyé présente une granulométrie comprise entre 5 et 50 mm, préférentiellement entre 6 mm, ou 7 mm ou 8 mm ou 10 mm, et 50 mm ou 45 mm ou 40 mm ou 35 mm ou 30 mm ou 25 mm ou 24 mm ou 23 mm ou 22 mm ou 21 mm ou 20 mm ou 19 mm ou 18 mm ou 17 mm ou 16 mm ou 15 mm. Toute combinaison de ces valeurs est avantageusement possible.

La granulométrie des entités individuelles du scrap revêtu broyé peut être mesurée par tamisage. Pour mesurer la granulométrie des entités individuelles du scrap revêtu broyé, on peut utiliser une série de tamis emboîtés les uns dans les autres. Les dimensions des mailles des tamis sont décroissantes du haut vers le bas. Les entités individuelles constitutives du scrap sont placés sur le tamis le plus haut et par vibrations ; on répartit les scrap sur les différents tamis selon leur grosseur. On peut utiliser des tamis à mailles carrées par leur ouverture ; la dimension nominale d'un tamis correspond à la longueur du côté de la maille (en mm). On peut utiliser 10 tamis de taille 60, 50, 40, 35, 25, 16, 8, 4,2, 1 mm. La durée de tamisage est préférablement d'au moins 10 minutes. Les inventeurs ont constaté que la granulométrie des entités individuelles du scrap revêtu n'était pas modifiée par l'opération de délaquage. Une granulométrie des entités individuelles comprise entre 5 et 50 mm permet une amélioration de la submergence du scrap dans le bain de métal liquide du four à induction.

L'estimation du pourcentage d'entité individuelle de scrap revêtu broyé ayant une granulométrie donnée peut être réalisé sur l'ensemble du scrap ou sur une partie, typiquement sur un nombre d'entité individuelle au moins égale à 20.

Avantageusement, la masse volumique du scrap revêtu est comprise entre 0.2 et 0.4 t /m$^3$(tonne par mètre cube). La masse volumique du scrap est mesurée de la façon suivante : un récipient cylindrique d'une capacité de 1 litre est rempli de scrap, une vibration est produite sous la forme de petits chocs de façon à tasser le scrap. L'opération est répétée jusqu'à ce que le récipient soit rempli à ras bord. Le poids du récipient rempli auquel est soustrait le poids du récipient vide permet de déterminer la masse volumique du scrap.

L'approvisionnement de scrap revêtu broyé ayant les caractéristiques géométriques telles que définies précédemment peut être obtenu en utilisant un procédé comprenant une étape de broyage à l'aide d'un broyeur à couteaux, de préférence équipé d'une grille. Dans un broyeur à couteaux, le scrap revêtu est découpé entre des couteaux montés sur un arbre en rotation rapide et une rangée de couteaux fixe. La présence d'une grille permet d'assurer un contrôle granulométrique à la sortie du broyeur. Cette étape peut être réalisée séparément sur un outil dédié. L'intérêt du broyeur à couteaux est d'obtenir des coupes franches, d'éviter de déformer le scrap et qu'il se replie sur lui-même.

L'approvisionnement de scrap revêtu broyé ayant les caractéristiques géométriques telles que définies précédemment peut être obtenu en utilisant un procédé de compactage basse densité (utilisé pour le transport et la manutention des scrap jusqu'au centre de recyclage), suivi d'un pré-broyeur à basse vitesse de rotation permettant la libération des UBC unitaires des balles compactées, suivi d'un broyeur permettant la coupure franche du scrap (type broyeur couteaux). Le compactage peut s'avérer utile si on doit transporter les scrap jusqu'au centre de recyclage. Cependant, il faut veiller à ce que le compactage n'augmente pas la densité apparente des scrap compactés, typiquement il faut veiller à ce que le compactage n'augmente pas la densité apparente des scrap compactés au-delà d'une densité d'environ 1400 kg/m3. On parle ainsi de compactage basse densité. En effet, si on compacte de façon trop dense, il n'est pas possible de libérer unitairement les scrap constitutifs des paquets (aussi appelés balles ou ballots) compactés. Les inventeurs ont constaté que si on ne peut pas broyer avec un broyeur à couteaux les scrap revêtus de façon individuelle, il serait nécessaire de viser une granulométrie inférieure à 5 mm pour obtenir le rapport de pliage souhaité. Cela a pour conséquence d'augmenter la perte métal au moment de la refusion.

Le pré-broyage à basse vitesse, qui peut être aussi appelé « déballeur » consiste à faire éclater les ballots sans modifier la forme des scrap unitaire compactés. Cette étape est bien sûr facultative si le scrap n'a pas été compacté.

Afin de garantir une granulométrie comprise entre 5 et 50 mm, préférentiellement entre 8 et 50 mm, une grille de dimension inférieure à 50 mm peut être utilisée, préférentiellement inférieure à 25 mm pendant l'opération de broyage. Les inventeurs ont constaté que l'utilisation de broyeurs à marteaux n'est pas avantageuse pour obtenir les géométries souhaitées, en particulier un rapport de pliage inférieur ou égale à 0.6 et une granulométrie comprise entre 5 et 50 mm, et une hauteur inférieure ou égale à 50 mm. En effet, l'opération de broyage de scrap réalisée avec un broyeur à marteaux a tendance à former des boulettes de scrap qui présentent un rapport de pliage supérieur à 0.6.

2/ Etape de délaquage

Le scrap revêtu broyé ainsi approvisionné est ensuite délaqué. Le délaquage consiste à chauffer le scrap revêtu à une température où l'humidité et les matières organiques par exemple, les peintures, les vernis de protection, les joints des couvercles et autres matières fumigènes) sont éliminées, mais sans chauffer à trop forte température pour éviter la fusion du métal. Typiquement, la température est comprise entre 450°C et 540°C. Le scrap est chauffé par transfert thermique avec l'atmosphère du four, préférentiellement par le gaz chauffé issu de la post-combustion des fumées et qui circule dans la chambre de délaquage. Cette opération permet d'une part de sécher le scrap et d'autre part d'éliminer les matières organiques. Les matières organiques peuvent être converties en $CO_2$ dans une unité de post combustion pour détruire des molécules organiques. On obtient ainsi un scrap sec, purifié, et sans matières fumigènes.

Après qu'un temps suffisant se soit écoulé, le scrap est retiré de la chambre de délaquage. L'opération de délaquage peut aussi être obtenue par voie chimique : le scrap revêtu broyé peut être immergé dans différents bains permettant la dissolution des matières organiques et suivi d'une opération de séchage.

Les inventeurs ont constaté que l''opération de délaquage ou de séchage ne modifie pas le rapport de pliage, la planéité, la forme du scrap. Le scrap propre présente donc le même rapport de pliage, la même planéité, la même granulométrie que le scrap revêtu broyé approvisionné. La masse volumique du scrap propre est légèrement modifiée par rapport à celle du scrap revêtu et reste comprise entre 0.2 et 0.4 t/m³.

Le scrap revêtu broyé, avant délaquage, a une quantité de carbone résiduelle initiale typiquement d'au moins 1.5% en poids. Avantageusement, le scrap, après l'étape de délaquage, présente une quantité de carbone résiduelle inférieure à 0.3% en poids, préférentiellement inférieure à 0.2% en poids, encore plus préférentiellement inférieure à 0.1% en poids. La quantité de carbone résiduelle en % en poids peut être mesurée à l'aide d'un instrument approprié tel que ceux fournis par la société LECO. L'analyse consiste à maintenir dans un four une masse donnée de scrap après l'étape de délaquage à une température comprise entre 250°C à 550 °C sous débit d'argon et de convertir les fumées en $CO_2$ dans un four catalyse. Le dosage du carbone est évalué en dosant la proportion de $CO_2$ via une sonde infra-rouge.

3/ Préparation d'un pied de bain initial de métal liquide dans un four à induction

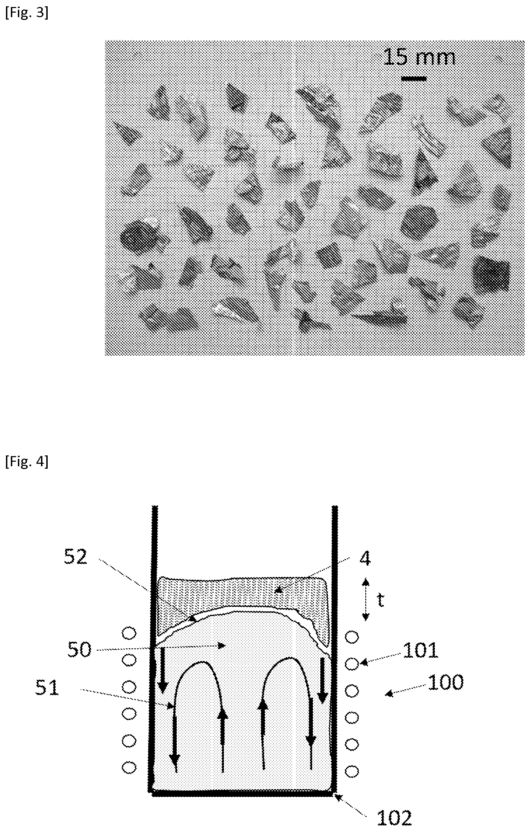

On dispose d'un four à induction à creuset 100 (figure 4).

Le four à induction à creuset se compose essentiellement d'une ou deux bobines inductrices refroidies par circulation de fluide caloporteur 101, entourant un garnissage réfractaire en pisé damé ou une coque réfractaire précuite, formant le creuset 102 dans lequel est placée la masse métallique à fondre.

On prépare un pied de bain de métal liquide 50 d'une première composition dans lequel sera déversé le scrap propre obtenu après délaquage et/ou séchage. Le scrap propre obtenu après délaquage est déversé à la surface 52 du bain de métal liquide. Le pied de bain de métal liquide initial peut être obtenu à partir des scrap propres obtenus après l'étape de délaquage ou à partir de déchets massifs, tels que des chutes de découpe ou des squelettes de découpe de tôles minces ou épaisses, lesdits déchets massifs étant constitués d'un alliage de composition compatible avec le scrap propre, et de préférence plus pur, dont la composition ne nuira pas à la composition finale. Typiquement, les déchets massifs sont des alliages d'aluminium de la série 3XXX, typiquement un alliage du type AA3104. Le pied de bain de métal liquide peut également être obtenu par la fusion de lingots de refusion d'un alliage de type 1xxx, 3xxx, 5xxx, 6xxx, 8xxx compatibles avec le scrap propre. Dans le cas de coulées successives, le pied de bain de métal liquide pourra avantageusement être constitué par le reliquat de la coulée précédente.

Le volume du pied de bain représente environ 30% à 60% du volume total du four à induction, typiquement la moitié de la capacité du four à induction. Si le volume de pied de bain est trop faible, le risque est que le pied de bain n'ait pas la capacité thermique suffisante pour se maintenir à l'état liquide et se solidifie dans le four. Le fonctionnement avec un pied de bain permet d'obtenir des taux de fusion avantageux de 2t/h à 4 t/h.

4/ Etape de chargement des scrap obtenus après l'étape 3 et fusion

L'étape de chargement du scrap propre, obtenu après délaquage et/ou séchage consiste à introduire le scrap délaqué dans le four à induction à creuset qui contient au préalable un pied de bain. Aucun sel de protection n'est utilisé dans le four à induction. Avantageusement, un gaz inerte, typiquement de l'argon est utilisé afin de protéger la surface de métal liquide. L'étape de chargement est effectuée de manière continue ou semi-continue. Le scrap est chargé sur le pied de bain de métal liquide par un moyen approprié, par exemple une vis sans fin ou une trémie ou un système de vibreur.

Avantageusement, lors de l'étape de chargement, les scrap délaqués, propres après délaquage sont chargés à une température supérieure à 100°C pour des raisons de sécurité afin de d'éviter tout risque d'explosion associée à la présence d'humidité résiduelle contenue dans la charge. Selon un mode préféré, pour augmenter le taux de fusion et réduire la consommation énergétique, les scrap séchés et délaqués sont immédiatement chargés dans le métal liquide après délaquage, à une température du scrap comprise entre 200°C et 450°C, préférentiellement entre 300°C et 450°C, encore plus préférentiellement entre 400°C et 450°C. Dans le cas où le scrap propre est enfourné à une température comprise entre 300°C et 450°C, il est avantageux que la durée de séjour des scrap propre au-dessus du bain de métal liquide soit courte afin de limiter leur oxydation.

Les inventeurs ont constaté qu'il est avantageux que le bain soit couvert par un lit de scrap délaqué flottant 4 à la suface du bain liquide 52 (Figure 4) pendant l'essentiel de la durée l'étape iv). La présence d'un lit de de scrap délaqué flottant permet de protéger la surface du bain de métal liquide de l'oxydation. L'essentiel de la durée de l'étape iv) correspond à une durée d'au moins 70% ou 80% ou 90% de la durée de l'étape iv). La durée de l'étape iv) est définie par le moment où on commence le chargement des scrap et la fin du chargement. La fin du chargement étant définie par le moment où la quantité de métal fondu dans le four à induction atteint son niveau de remplissage maximum.

Avantageusement, l'épaisseur du lit de scrap délaqué flottant est d'au moins 300 mm, avantageusement 1000 mm (t, figure 4). Le lit de scrap délaqué flottant permet l'alimentation en continu du bain de métal liquide jusqu'à sa complète dissolution. Les inventeurs ont constaté qu'il est avantageux qu'une entité individuelle de scrap délaqué soit maintenue à la surface du bain de métal liquide pendant une durée d'au plus 2 min, de préférence entre 30 s et 90 s, ceci pour éviter son oxydation. Il est donc important de favoriser leur submergence dans le bain de métal liquide.

Avantageusement, la submergence des scrap est améliorée en agissant sur le champ de vitesse de circulation du bain de métal de liquide de telle sorte à obtenir un champ de vitesse descendant 51 le long des parois du creuset (figure 4). Ce champ de vitesse de circulation descendant résulte des forces électromagnétiques, dites forces de Laplace, bien connues dans la conception des fours à induction à creuset. Le champ de vitesse descendant le long des parois du creuset facilite la submergence des entités individuelles de scrap délaqué présentes dans le lit de scrap délaqué flottant. Les inventeurs attribuent la rapide submergence dans le bain de métal liquide à la forme particulière des entités individuelles utilisées selon l'invention. En effet, de par leur granulométrie et leur planéité, elles s'organisent sous forme de strates empilées, comme des cartes empilées arrangées parallèlement selon leur plus grande face. Cela protège efficacement le bain de métal liquide et facilite l'introduction des entités individuelles dans le bain de métal liquide. Celles-ci glissent les unes sur les autres et plongent le long de la paroi du creuset.

Par la présence de bobines inductrices 101 à la périphérie du creuset 102, il est possible d'obtenir un champ de vitesse descendant 51, le long des parois du creuset permettant d'améliorer la submergence des scrap selon l'invention. Ce champ de vitesse descendant 51 créee un vortex qui facilite l'immersion des scrap.

La création d'un vortex à la surface du bain n'est pas possible si on utilise un four à induction à canal. Selon les inventeurs, un four à induction à canal ne permet pas d'obtenir les conditions favorables pour refondre des scrap selon l'invention : l'absence de vortex à la surface du bain fait que si on introduit les scrap selon l'invention, ceux-ci vont s'empiler les uns sur les autres, faire un matelas isolant et ne vont pas être immergés dans le bain de métal liquide. Si les scrap sont maintenus longtemps au-dessus du bain de métal liquide, les scrap peuvent s'oxyder et diminuer le rendement métal.

Le champ de vitesse descendant le long des parois du creuset est obtenu en sélection la fréquence du four à induction. La sélection d'une fréquence entre 50 Hz et 150 Hz, préférentiellement à environ 60 Hz permet d'obtenir un champ de vitesse descendant. Les inventeurs ont constaté que ce champ de vitesse descendant induit la formation d'un dôme à laa surface supérieure de bain de métal liquide. Cette forme en dôme permet d'accélérer la submergence du scrap dans le liquide. Il est aussi possible d'agir sur la puissance du four pour modifier le champ de vitesse descendant. Il est possible d'adapter la fréquence et/ou la puissance du four en fonction du niveau de remplissage du four comme des calculs magnétohydrodynamiques peuvent le montrer. L'empilement des entités individuelles du scrap délaqué associé à un champ de vitesse descendant est particulièrement avantageux pour la submergence des scrap dans le métal liquide. Avantageusement, les paramètres de puissance et de fréquence du four sont adaptés en fonction de l'épaisseur du lit de scrap délaqué et de la phase du cycle (début, fin refusion, montée en température et maintien).

Les inventeurs ont constaté que pour une masse volumique comprise entre 0.2 et 0.4 t/m3, le scrap est rapidement submergé dans le bain de métal liquide. Cela évite ainsi l'oxydation du scrap et permet de maximiser le rendement métal lors de la fusion.

La fusion des scrap permet de former un bain de métal liquide d'une seconde composition. La seconde composition est généralement différente de la première composition mais pourrait également être identique si le scrap a la même composition que le pied de bain initial.

Pendant la durée de chargement et après refusion complète du scrap, la température du bain de métal liquide est inférieure ou égale à 750°C, préférentiellement inférieure ou égale à 730°C.

L'invention concerne également un procédé de fabrication d'un produit intermédiaire tel qu'une plaque de laminage, une billette de filage, un bloc de forge ou un lingot ou un bol dans lequel on effectue une étape de coulée du métal liquide obtenu par le procédé de fusion selon l'invention.

Avantageusement, avant l'étape de coulée, le métal est dégazé et/ou filtré et/ou traité de manière à enlever les oxydes éventuellement présents et/ou diminuer la teneur en hydrogène et/ou éliminer toute impureté indésirable.

Exemple 1- Caractéristiques des scrap revêtus broyés

Dans cet exemple, le scrap revêtus provient de boites de boisson usagées (UBC). Dans cet exemple le broyage a été effectué avec un broyeur à couteaux avec une grille de calibration inférieure à 40 mm. La figure 3 représente l'aspect des scrap obtenus dans le broyeur à couteaux qui sont représentatifs des scrap selon l'invention. Ces scraps ainsi broyés sont caractérisés de telle sorte à déterminer, le rapport de pliage (Tableau 2), leur granulométrie par tamisage (Tableau 2), la planéité du scrap en mesurant la hauteur (Tableau 3), leur densité apparente (Tableau 1).

75% des entités individuelles mesurées présentent un rapport de pliage inférieur ou égal à 0.6. 74% des entités individuelles mesurées présentent une granulométrie comprise entre 8 et 50 mm. 100% des entités individuelles mesurées présentent une hauteur inférieure ou égale à 15 mm.

[Tableau 1]

| Scrap Broyage selon l'invention | |
|---|---|
| % d'entités individuelles ayant un rapport de pliage inférieur ou égal à 0.6 | 75 % |
| % d'entités individuelles ayant une granulométrie comprise entre 8 et 50 mm | 74 % |
| % d'entités individuelles ayant une hauteur inférieure ou égale à 15 mm | 100 % |
| Densité apparente (t/m$^3$) | 0.30 |

[Tableau 2]

| | Proportion par rapport de pliage | | | | |
|---|---|---|---|---|---|
| Rapport de pliage | 0-0.2 | 0.2-0.4 | 0.4-0.6 | 0.6-0.8 | 0.8-1 |
| % entité individuelle (nombre mesuré 25) | 32% | 4% | 48% | 12% | 4% |

[Tableau 3]

| | proportion par gamme de tamis (mm) | | | | | | |
|---|---|---|---|---|---|---|---|
| Taille | < 1 | 1 - 2 | 2 - 4 | 4 - 8 | 8 - 16 | 16 - 25 | > 25 |
| % entité individuelle (nombre mesuré environ 250) | 0,4% | 0,9% | 4,0% | 20,4% | 70,8% | 3% | - |

[Tableau 4]

| | Proportion par hauteur | | | | |
|---|---|---|---|---|---|
| hauteur | 0-5 | 5 - 10 | 10-15 | 15-20 | >20 |
| % entité individuelle (nombre mesuré 25) | 72% | 28% | 0% | 0% | 0% |

Exemple 2

Le scrap revêtu broyé selon l'invention caractérisé dans l'exemple précédent a été approvisionné et délaqué dans un four de délaquage de type IDEX. Le délaquage a été réalisé à un débit de chargement de 500 kg/h, une vitesse de rotation de four 1 tr/min, et une température de sortie fumées de 440°C à 540°C. ces conditions ont permis d'obtenir un carbone résiduel variant de 0,1% -0,2%.

Après délaquage, le scrap délaqué a été introduit dans un four à induction à creuset préalablement rempli d'un pied de bain liquide. Le pied de bain initial a été réalisé à partir de scrap de 3104, son volume est d'environ 40% de la capacité maximale du creuset. Aucun sel de protection a été utilisé. Le scrap délaqué a été introduit dans le four à une température supérieure à 100°C, typiquement à une température de 200°C. La fréquence du four a été fixée à 62 Hz. La puissance du four a été fixée en début de cycle à 50%. La sélection de la fréquence voisine de 60 Hz permet d'accélérer la submergence du broyat dans le liquide. Un matelas de scrap délaqué a été maintenu à la surface du bain liquide afin de réduire la pénétration de l'air et protéger la surface du bain contre l'oxydation. Un soufflage d'argon a aussi été réalisé pour renforcer la protection du métal. Le chargement du scrap délaqué est réalisé à une cadence d'environ 4000 kg/h. Compte tenu de la cinétique d'oxydation de l'alliage dans la gamme de température mesurée dans le matelas (220°C à 250°C), le scrap délaqué n'a pas le temps de s'oxyder à la surface du bain. Il n'y séjourne pas plus longtemps que 1 minute. La géométrie des entités individuelles du scrap et leur organisation en strates facilite leur écoulement à la surface du bain ainsi que le long du creuset.

Un rendement de métal net de 97.8 % a pu être obtenu en utilisant le procédé selon l'invention. En particulier, le rendement net sur l'élément Mg est de 94%. Les inventeurs pensent que cet excellent rendement est rendu possible par le choix de la géométrie des entités individuelles du scrap revêtu broyés, en particulier le rapport de pliage, la granulométrie et la planéité.

Exemple 3 - Référence

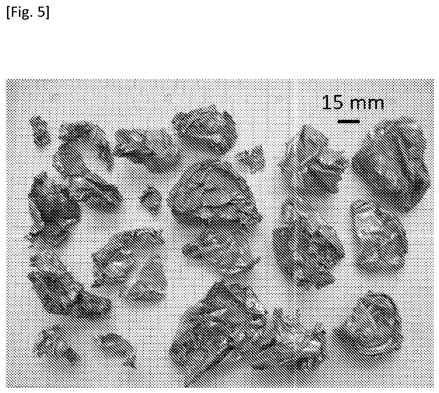

A titre de comparaison, le rapport de pliage obtenus sur des scrap revêtus broyés obtenus par broyage à marteaux (voir figure 5) a été déterminé selon le même principe que celui décrit dans l'exemple 1.

Le rapport de pliage a été mesuré sur 25 échantillons. On observe ainsi que les scrap broyés obtenus par broyage à marteaux ne permettent pas d'obtenir un rapport de pliage <0.6 (voir tableau 5) : 100% des scrap ont un rapport de pliage supérieur à 0.6.

Les inventeurs considèrent que cela est lié au fait que le broyage à couteaux permet d'avoir une découpe plus tranchante et donc d'éviter que les scraps ne se replient sur eux même.

[Tableau 5]

| | Proportion par rapport de pliage | | | | |
|---|---|---|---|---|---|
| Rapport de pliage | 0-0.2 | 0.2-0.4 | 0.4-0.6 | 0.6-0.8 | 0.8-1 |
| % entité individuelle (nombre mesuré 25) | 0 | 0 | 0 | 68% | 32% |

De la même façon que précédemment, la granulométrie a été mesurée : on constate que majoritairement le scrap obtenu avec un broyeur à marteaux ne permet pas d'obtenir majoritairement une granulométrie comprise entre 8 et 16 mm (voir tableau 6).

[Tableau 6]

| | proportion par gamme de tamis (mm) | | | | | | |
|---|---|---|---|---|---|---|---|
| Taille | < 1 | 1 - 2 | 2 - 4 | 4 - 8 | 8 - 16 | 16 - 25 | > 25 |
| % entité individuelle (nombre mesuré environ 250) | 0,5% | 0,8% | 2.3% | 7.9% | 19,8% | 18.8% | 50% |

## Revendications

1.  Méthode de refusion de scrap revêtu en alliage d'aluminium comprenant les étapes suivantes :

    (i) on approvisionne du scrap revêtu broyé à base d'alliages d'aluminium, constitué d'entités individuelles,
    (ii) on réalise un délaquage dudit scrap revêtu broyé pour obtenir du scrap délaqué,
    (iii) on prépare un pied de bain initial de métal liquide d'une première composition dans un four à induction à creuset fonctionnant à une fréquence donnée,
    (iv) on charge le scrap délaqué dans le four à induction directement sur le pied de bain initial pour être fondu,

    **caractérisée en ce que**

    le scrap revêtu broyé approvisionné à l'étape i) est obtenu en utilisant un procédé comprenant une étape de broyage à l'aide d'un broyeur à couteaux, optionnellement équipé d'une grille configurée pour ajuster une granulométrie
    et au moins 50% des entités individuelles du scrap revêtu broyé approvisionné à l'étape i) a un rapport de pliage (R) inférieur ou égal à 0.6,
    où le rapport de pliage (R) d'une entité individuelle est défini par l'expression

    $$rapport\ de\ pliage = R = \frac{surface\ dépliée - surface\ pliée}{surface\ dépliée}$$

    où la surface pliée est la surface maximale de la projection orthogonale de l'entité individuelle sur un plan et la surface dépliée est la surface totale de la même entité individuelle après avoir été dépliée

2.  Méthode de refusion de scrap revêtu selon la revendication 1 **caractérisée en ce que** au moins 50% des entités individuelles du scrap revêtu broyé approvisionné à l'étape i) présente une granulométrie comprise entre 5 et 50 mm, préférentiellement entre 8 et 50 mm, plus préférentiellement entre 8 et 25 mm, plus préférentiellement entre 8 et 16 mm, la granulométrie étant mesurée par tamisage.

3. Méthode de refusion de scrap revêtu selon la revendication 1 ou 2 **caractérisée en ce que** au moins 50% des entités individuelles du scrap revêtu broyé approvisionné à l'étape i) présente une hauteur inférieure ou égale à 50 mm, de manière préférée inférieure ou égale à 30 mm, encore plus préférentiellement inférieure ou égale à 15 mm.

4. Méthode de refusion de scrap d'aluminium revêtu selon l'une quelconque des revendications 1 à 3 **caractérisée en ce que** la masse volumique du scrap revêtu broyé approvisionné à l'étape i) est comprise entre 0.2 et 0.4 t/m3.

5. Méthode de refusion de scrap revêtu selon l'une quelconque des revendications 1 à 4 **caractérisée en ce que** le scrap revêtu approvisionné à l'étape i) est obtenu à partir de de scrap de récupération issus d'emballage ménager en aluminium, typiquement des boîtes de boisson usagées en aluminium.

6. Méthode de refusion de scrap revêtu selon l'une quelconque des revendications 1 à 5 **caractérisée en ce que** le scrap délaqué obtenu après l'étape ii) est introduit dans le four à induction à l'étape iv) à une température supérieure à 100°C, préférentiellement à une température comprise entre 200°C et 450°C, plus préférentiellement entre 300°C et 450°C, encore plus préférentiellement entre 400°C et 450°C.

7. Méthode de refusion de scrap revêtu selon l'une quelconque des revendications 1 à 6 **caractérisée en ce qu'**aucun sel de protection n'est utilisé dans le four à induction.

8. Méthode de refusion de scrap revêtu selon l'une quelconque des revendications 1 à 7 **caractérisée en ce que** lors de l'étape iv) un lit de scrap délaqué flottant est maintenu à la surface du bain liquide durant l'essentiel de la durée de l'étape iv) et où l'épaisseur du lit de scrap délagué flottant est d'au moins 300 mm.

9. Méthode de refusion de scrap revêtu selon l'une quelconque des revendications 1 à 8 **caractérisée en ce que** la fréquence du four à induction lors de l'étape iv) est comprise entre 50 Hz-et 150 Hz.

10. Méthode de refusion de scrap revêtu selon l'une quelconque des revendications 1 à 9 **caractérisée en ce que** le chargement à l'étape iv) est réalisé de manière discontinue ou continue, de préférence à l'aide d'une vis sans fin ou une trémie ou un système de vibreur.

11. Méthode de refusion de de scrap revêtu selon l'une quelconque des revendications 1 à 10 **caractérisée en ce que** la température du bain de métal liquide lors de l'étape iv) est inférieure ou égale à 750°C, préférentiellement inférieure ou égale à 730°C.

12. Méthode de refusion de de scrap revêtu selon l'une quelconque des revendications 1 à 11 **caractérisée en ce que** lors de l'étape iv) le bain de métal liquide est inerté, typiquement à l'aide d'un flux de gaz argon.

**Patentansprüche**

1. Verfahren zum Umschmelzen von mit einer Aluminiumlegierung beschichtetem Schrott, das die folgenden Schritte umfasst:

(i) Bereitstellen des zerkleinerten, auf Basis von Aluminiumlegierungen beschichteten Schrotts, der aus einzelnen Einheiten besteht,
(ii) Durchführen einer Entlackung des zerkleinerten, beschichteten Schrott, um entlackten Schrott zu erhalten,
(iii) Vorbereiten eines anfänglichen Metallschmelzebads aus einer ersten Zusammensetzung in einem Induktionstiegelofen, der mit einer bestimmten Frequenz betrieben wird,
(iv) Beschicken des Induktionsofens mit dem entlackten Schrott direkt in das anfängliche Bad, um den Schrott zu schmelzen,

**dadurch gekennzeichnet, dass**

der in Schritt i) bereitgestellte zerkleinerte, beschichtete Schrott mittels eines Verfahrens erhalten wird, das einen Zerkleinerungsschritt mithilfe einer Zerkleinerungsanlage mit Messern umfasst, die optional mit einem Gitter ausgestattet ist, das so konfiguriert ist, dass es eine Korngröße einstellt, und mindestens 50 % der einzelnen Einheiten des in Schritt i) bereitgestellten zerkleinerten, beschichteten Schrotts ein Faltverhältnis (R) von 0,6 oder weniger aufweisen,

wobei das Faltverhältnis (R) einer einzelnen Einheit durch den folgenden Ausdruck definiert wird:

$$Faltverhältnis = R = \frac{entfaltete\ Fläche\ \text{-}\ gefaltete\ Fläche}{entfaltete\ Fläche}$$

wobei die gefaltete Fläche die maximale Fläche der orthogonalen Projektion der einzelnen Einheit auf eine Ebene ist und die entfaltete Fläche die Gesamtfläche derselben einzelnen Einheit nach dem Entfalten ist.

2. Verfahren zum Umschmelzen von beschichtetem Schrott nach Anspruch 1, **dadurch gekennzeichnet, dass** mindestens 50 % der einzelnen Einheiten des in Schritt i) bereitgestellten zerkleinerten, beschichteten Schrotts eine Korngröße zwischen 5 und 50 mm, vorzugsweise zwischen 8 und 50 mm, bevorzugter zwischen 8 und 25 mm, bevorzugter zwischen 8 und 16 mm, aufweisen, wobei die Korngröße durch Sieben gemessen wird.

3. Verfahren zum Umschmelzen von beschichtetem Schrott nach Anspruch 1 oder 2, **dadurch gekennzeichnet, dass** mindestens 50 % der einzelnen Einheiten des in Schritt i) bereitgestellten zerkleinerten, beschichteten Schrotts eine Höhe von 50 mm oder weniger, bevorzugt von 30 mm oder weniger, noch bevorzugter von 15 mm oder weniger, aufweisen.

4. Verfahren zum Umschmelzen von mit Aluminium beschichtetem Schrott nach einem der Ansprüche 1 bis 3, **dadurch gekennzeichnet, dass** die Dichte des in Schritt i) bereitgestellten zerkleinerten, beschichteten Schrotts zwischen 0,2 und 0,4 t/m3 liegt.

5. Verfahren zum Umschmelzen von beschichtetem Schrott nach einem der Ansprüche 1 bis 4, **dadurch gekennzeichnet, dass** der in Schritt i) bereitgestellte beschichtete Schrott aus Recyclingschrott aus Haushaltsverpackungen aus Aluminium, typischerweise aus gebrauchten Getränkedosen aus Aluminium, erhalten wird.

6. Verfahren zum Umschmelzen von beschichtetem Schrott nach einem der Ansprüche 1 bis 5, **dadurch gekennzeichnet, dass** der nach Schritt ii) erhaltene entlackte Schrott in Schritt iv) bei einer Temperatur von mehr als 100 °C, vorzugsweise bei einer Temperatur zwischen 200 °C und 450 °C, bevorzugter zwischen 300 °C und 450 °C, noch bevorzugter zwischen 400 °C und 450 °C, in den Induktionsofen eingeführt wird.

7. Verfahren zum Umschmelzen von beschichtetem Schrott nach einem der Ansprüche 1 bis 6, **dadurch gekennzeichnet, dass** im Induktionsofen kein Schutzsalz verwendet wird.

8. Verfahren zum Umschmelzen von beschichtetem Schrott nach einem der Ansprüche 1 bis 7, **dadurch gekennzeichnet, dass** in Schritt iv) ein schwimmendes Bett aus entlacktem Schrott auf der Oberfläche des Schmelzbads während des Großteils der Dauer von Schritt iv) gehalten wird und wobei die Dicke des schwimmenden Betts aus entlacktem Schrott mindestens 300 mm beträgt.

9. Verfahren zum Umschmelzen von beschichtetem Schrott nach einem der Ansprüche 1 bis 8, **dadurch gekennzeichnet, dass** die Frequenz des Induktionsofens bei Schritt iv) zwischen 50 Hz und 150 Hz liegt.

10. Verfahren zum Umschmelzen von beschichtetem Schrott nach einem der Ansprüche 1 bis 9, **dadurch gekennzeichnet, dass** das Beschicken in Schritt iv) diskontinuierlich oder kontinuierlich erfolgt, vorzugsweise mithilfe einer Schnecke oder eines Trichters oder eines Rüttelsystems.

11. Verfahren zum Umschmelzen von beschichtetem Schrott nach einem der Ansprüche 1 bis 10, **dadurch gekennzeichnet, dass** die Temperatur der Flüssigmetallschmelze in Schritt iv) kleiner oder gleich 750 °C, vorzugsweise kleiner oder gleich 730 °C, ist.

12. Verfahren zum Umschmelzen von beschichtetem Schrott nach einem der Ansprüche 1 bis 11, **dadurch gekennzeichnet, dass** in Schritt iv) das Metallschmelzebad inertisiert wird, typischerweise mithilfe eines Argon-Gasstroms.

**Claims**

1. A method for re-melting coated aluminum alloy scrap comprising the following steps:

(i) aluminum alloy shredded coated scrap, consisting of individual entities, is supplied,
(ii) decoating of said shredded coated scrap is carried out to obtain decoated scrap,
(iii) an initial liquid metal heel of a first composition is prepared in a crucible induction furnace operating at a given frequency,
(iv) the decoated scrap is loaded into the induction furnace directly on the initial heel in order to be melted,

**characterized in that**

the shredded coated scrap supplied in step i) is obtained using a method comprising a shredding step using a knife mill, optionally equipped with a grid configured to adjust a particle size
and at least 50% of the individual entities of the shredded coated scrap supplied in step i) has a fold ratio (R) of less than or equal to 0.6,
wherein the fold ratio (R) of an individual entity is defined by

$$fold\ ratio\ = R = \frac{unfolded\ area - folded\ area}{unfolded\ area}$$

wherein the folded area is the maximum area of the orthogonal projection of the individual entity onto a plane and the unfolded area is the total area of the same individual entity after it has been unfolded

2. The scrap re-melting method according to claim 1 **characterized in that** at least 50% of the individual entities of the shredded coated scrap supplied in step i) has a particle size comprised between 5 and 50 mm, preferably between 8 and 50 mm, more preferably between 8 and 25 mm, more preferably between 8 and 16 mm, the particle size being measured by sieving.

3. The scrap re-melting method according to claim 1 or 2 **characterized in that** at least 50% of the individual entities of the shredded coated scrap supplied in step i) has a height of less than or equal to 50 mm, preferably less than or equal to 30 mm, even more preferably less than or equal to 15 mm.

4. The method for re-melting coated aluminum scrap according to any one of claims 1 to 3, **characterized in that** the volumetric mass of the shredded coated scrap supplied in step i) is comprised between 0.2 and 0.4 t/m$^3$.

5. The method for re-melting coated scrap according to any one of claims 1 to 4 **characterized in that** the coated scrap supplied in step i) is obtained from scrap recovered from aluminum household packaging, typically used aluminum beverage cans.

6. The method for re-melting coated scrap according to any one of claims 1 to 5, **characterized in that** the decoated scrap obtained after step ii) is introduced into the induction furnace in step iv) at a temperature above 100°C, preferably at a temperature comprised between 200°C and 450°C, more preferably between 300°C and 450°C, even more preferably between 400°C and 450°C.

7. The scrap re-melting method according to any one of claims 1 to 6 **characterized in that** no protective salt is used in the induction furnace.

8. The method for re-melting coated scrap according to any one of claims 1 to 7, **characterized in that** during step iv) a floating decoated scrap bed is maintained on the surface of the liquid bath for most of the duration of step iv) and wherein the thickness of the floating decoated scrap bed is at least 300 mm.

9. The method for re-melting coated scrap according to any one of claims 1 to 8 **characterized in that** the frequency of the induction furnace during step iv) is comprised between 50 Hz and 150 Hz.

10. The scrap re-melting method according to any one of claims 1 to 9 **characterized in that** the loading in step iv) is carried out discontinuously or continuously, preferably using a worm or a hopper or a vibrator system.

11. The method for re-melting coated scrap according to any one of claims 1 to 10 **characterized in that** the temperature of the liquid metal bath during step iv) is less than or equal to 750°C, preferably less than or equal to 730°C.

12. The scrap re-melting method according to any one of claims 1 to 11 **characterized in that** during step iv) the liquid metal bath is inerted, typically using a flow of argon gas.

[Fig. 1]

1a

1b

1c

1d

[Fig. 2]

[Fig. 3]

[Fig. 4]

[Fig. 5]

**RÉFÉRENCES CITÉES DANS LA DESCRIPTION**

**Documents brevets cités dans la description**

- US 3999980 A
- US 20200255922 A
- WO 2007015013 A
- US 4159907 A
- US 4571258 A
- US 6074455 A
- US 3873305 A
- JP 10147822 B

**Littérature non-brevet citée dans la description**

- **M. SCHLESINGER**. Alumnium recycling. CRC Press, 2007
- **F. HERBULOT**. Récupération et recyclage de l'aluminium - Techniques de l'Ingénieur. March 2001
- **VERRAN et al.** *Ressources, Conservation and Recycling*, 2008, vol. 52, 731-736